# EUROPEAN PATENT APPLICATION

(11) **EP 2 642 740 A2**
(43) Date of publication of application: **25.09.2013**
(21) Application number: 13159095.2
(22) Date of filing: 14.03.2013
(51) Int. Cl.: H04N 1/00

(54) **Image reading device, apparatus including image reading device, image reading controlling method, and recording medium storing image reading control program**

(30) Priority: 22.03.2012 JP 2012065453
(71) Applicant: Ricoh Company, Ltd., Tokyo 143-8555 (JP)
(72) Inventor: Kitai, Tadashi, Tokyo, 143-8555 (JP); Kaneko, Hitomi, Tokyo, 143-8555 (JP); Ishizaki, Hiroyoshi, Tokyo, 143-8555 (JP); Kojima, Keiji, Tokyo, 143-8555 (JP); Kawamoto, Hiroyuki, Tokyo, 143-8555 (JP); Makino, Hideyo, Tokyo, 143-8555 (JP)
(74) Representative: Schwabe - Sandmair - Marx

(57) **Abstract**

An image reading device (1) includes an imaging device (13) including a plurality of imaging elements (13a), and a calibration plate (31) having a surface on which a plurality of color patches is formed, and a processor (14) that instructs the imaging device (13) to read the plurality of color patches while changing a relative position between the plurality of color patches and the plurality of imaging elements (13a), to output reading results of the plurality of color patches.

## Description

### BACKGROUND

### Field of the Invention

The present invention generally relates to an image reading device, an apparatus including the image reading device, an image reading control method, and a recording medium storing an image reading control program.

### Description of the Related Art

With the increased needs for electronic data, various image processing apparatuses are widely used such as printers, facsimiles, scanners, copiers, or multifunctional apparatuses capable of performing a plurality of image processing functions.

Of the plurality of image processing functions, the function of image reading, which may be performed by the scanner, is carried out using an optical sensor that converts optical information read from an image to an electric signal. The optical sensor needs to be regularly calibrated, such that the tone of the image subjected for reading, matches the tone of image data generated by reading the image. For example, a value read from a measurement pattern printed on a recording sheet is compared with a reference value to correct the reading characteristics of the optical sensor.

In one example, when the optical sensor is implemented as a line sensor in which a plurality of optical sensors are arranged in a sub-scanning direction, the line sensor may be calibrated as described in Japanese Patent Application Publication No. 2010-114498-A. In an image forming apparatus described in Japanese Patent Application Publication No. 2010-114498-A, a calibrator having a polygonal shape, which is rotatable in the backside of a recording sheet, is provided at a reading position to be read by the sensor in a sheet transfer path. The sensor is calibrated when there is no recording sheet being transferred in the sheet transfer path.

### SUMMARY

The calibration technique described in Japanese Patent Application Publication No. 2010-114498-A requires complicated processing, such as printing of a measurement pattern, reading the measurement pattern, processing the read measurement pattern, and comparing the read measurement pattern with a reference value. Further, to keep a sufficient level of reading accuracy, color tones of each one of the respective surfaces of the calibrator need to be uniform over relatively a wide area reading area of the line sensor.

In view of the above, one object according to one embodiment of the present invention is to provide an image reading device having an optical sensor that can be easily calibrated in terms of structure and control process, and a method of controlling the process of calibrating an optical sensor.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic block diagram illustrating a side view of an image reading device, according to an example embodiment of the present invention;
FIG. 2 is a schematic diagram illustrating a top view of the image reading device of FIG. 1;
FIG. 3 is a schematic diagram illustrating a surface of a calibration plate provided in the image reading device of FIG. 1,
FIG. 4 is a flowchart illustrating operation of calibrating a line sensor provided in the image reading device of FIG. 1, performed by the image reading device of FIG. 1, according to an example embodiment of the present invention;
FIG. 5 is a flowchart illustrating operation of applying shading correction, performed by the image reading device of FIG. 1, according to an example embodiment of the present invention;
FIG. 6 is a flowchart illustrating operation of reading data of one line, performed by the image reading device of FIG. 1 during the shading correction operation of FIG. 5, according to an example embodiment of the present invention;
FIG. 7 is an illustration for explaining the positional relationship between the calibration plate of FIG. 3 and a reading position to be read by the line sensor of the image reading device of FIG. 1, according to an example embodiment of the present invention;
FIG. 8A is an illustration of example read image data, obtained by the image reading device of FIG. 1, for the odd rows of color patches formed on the calibration plate of FIG. 3;
FIG. 8B is an illustration of example read image data, obtained by the image reading device of FIG. 1, for the even rows of color patches formed on the calibration plate of FIG. 3;
FIG. 9 is an illustration of example image data converted from the read image data of FIG. 8A or 8B;
FIG. 10 is an illustration for explaining operation of extracting pixel values from the converted image data of FIG. 9 as a reading result of the line sensor;
FIG. 11 is a flowchart illustrating operation of initializing the position of the calibration plate of FIG. 3, according to an example embodiment of the present invention;
FIG. 12 is a flowchart illustrating operation of calibrating the line sensor, performed by the image reading device of FIG. 1, according to an example embodiment of the present invention;
FIG. 13 is an illustration for explaining the positional relationship between the calibration plate of FIG. 3 and a reading position to be read by the line sensor of the image reading device of FIG. 1, according to an example embodiment of the present invention;
FIG. 14 is a flowchart illustrating operation of initializing the position of the calibration plate of FIG. 3, according to an example embodiment of the present invention;
FIGs. 15A and 15B are an illustration for explaining operation of controlling the position of the calibration plate of FIG. 3; and
FIG. 16 is a schematic block diagram illustrating a structure of an image inspection system including the image reading device of FIG. 1, according to an example embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION OF EXAMPLE EMBODIMENTS

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

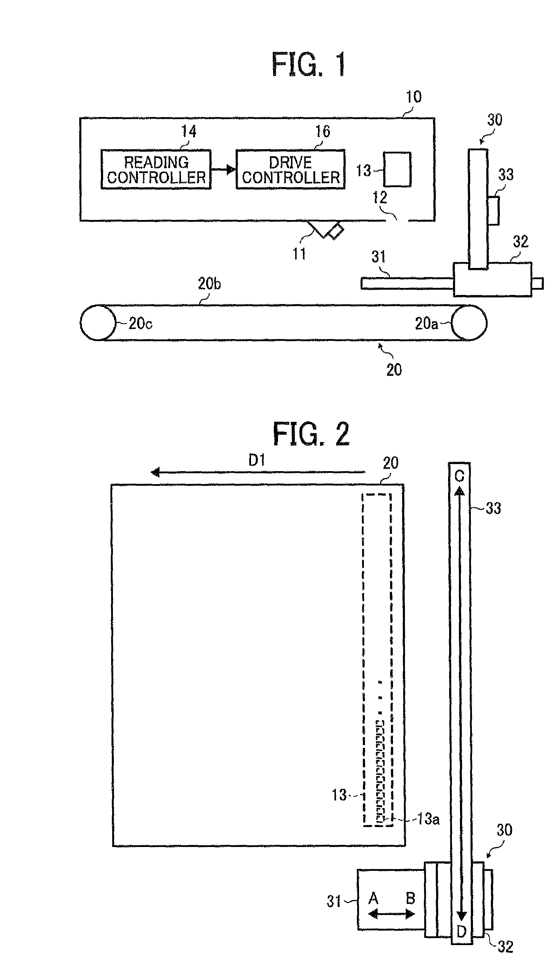

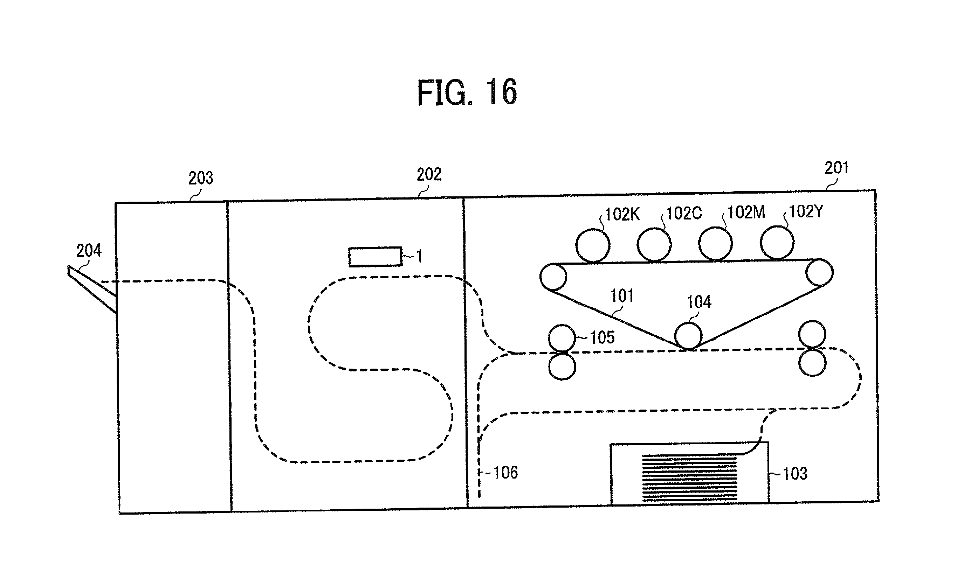

FIG. 1 is a side view illustrating a structure of an image reading device 1 according to an example embodiment of the present invention. FIG. 2 is a top plan view illustrating the structure of the image reading device 1. As illustrated in FIG. 1, the image reading device 1 includes a light source 11, a reading window 12, a reader 10 including a line sensor 13, a reading controller 14, and a drive controller 16, a transfer device 20, and a calibrator 30 that calibrates the line sensor 13 of the reader 10. As described below referring to FIG. 16, the image reading device 1 reads a surface of a printed image output from the outside apparatus, which is conveyed by the transfer device 20 to a position below the reading window 12.

The reader 10 may be implemented by a scanner engine, which reads a surface of the printed sheet being transferred by the transfer device 20. The light source 11 irradiates light onto the surface of the printed sheet being transferred. The light irradiated by the light source 11 is reflected by the printed surface toward the line sensor 13 via the reading window 12. The line sensor 13 detects incident light reflected via the reading window 12, converts the detected light level to an electric signal, and outputs the electric signal that reflects the detected light level to the reading controller 14. The line sensor 13 thus functions as an imaging device.

The reading controller 14 controls the reader 10, as well as entire system of the image reading device 1. The reading controller 14 generates image data based on the electric signal input from the line sensor 13 to perform reading operation. The drive controller 16 controls movements of the calibrator 30 according to the instructions received from the reading controller 14, such that each part in the calibrator 30 moves under control of the reading controller 14.

As illustrated in FIG. 2, in this example, the line sensor 13 is an optical sensor in which a plurality of imaging elements 13a are arranged in a direction orthogonal to a sheet transfer direction D. The values output by the imaging elements 13a respectively correspond to the pixels of the output image data. With these imaging elements 13a, the line sensor 13 reads the surface of the printed sheet, line by line, in the main scanning direction.

The image reading device 1 may be operated in two modes, that is, a normal operation mode and a calibration mode. In the normal operation mode, the image reading device 1 outputs 24-bit RGB image data including 8 bits of read (R) image data, 8 bits of green (G) image data, and 8 bits of blue (B) image data.

In the calibration mode, the image reading device 1 outputs image data that is greater in number of bits than the 24-bit RGB image data that is output in the normal operation mode. For example, 30-bit RGB image data including 10 bits of R image data, 10 bits of G image data, and 10 bits of B image data may be output. With the increased number of bits, calibration may be performed with improved accuracy, as resolution capability of a reading signal increases.

The transfer device 20 includes a drive roller 20a that is rotatably driven by a motor, an endless belt 20b wound around the drive roller 20a, and a driven roller 20c that is rotated with rotation of the endless belt 20b. The endless belt 20b is also wound around the driven roller 20c, such that the endless belt 20b is stretched over the rollers 20a and 20c. The printed sheet output from the outside apparatus is carried by the endless belt 20b in the sub-scanning direction with the rotation of the endless belt 20b.

The calibrator 30 includes a calibration plate 31 to be read in the calibration mode, and a drive mechanism that moves the calibration plate 31 in at least a whole range of the line sensor 13. As illustrated in FIGs. 1 and 2, the calibrator 30 includes a calibration plate holder 32 that holds the calibration plate 31, and a guide rail 33 that guides movements of the calibration plate holder 32 in the direction between the position C and the position D in FIG. 2, that is, in the main scanning direction.

The calibration plate holder 32 supports the calibration plate 31 in a manner such that the calibration plate 31 can be moved in the direction between the position A and the position B in FIG. 2, that is, in the sub-scanning direction. The calibration plate 31 is formed with a plurality of calibration color patches to be read by the line sensor 13, for example, in the calibration process. As the calibration plate holder 32 moves the calibration plate 31 in the sub-scanning direction, all the color patches formed on the calibration plate 31 can be read by the line sensor 13.

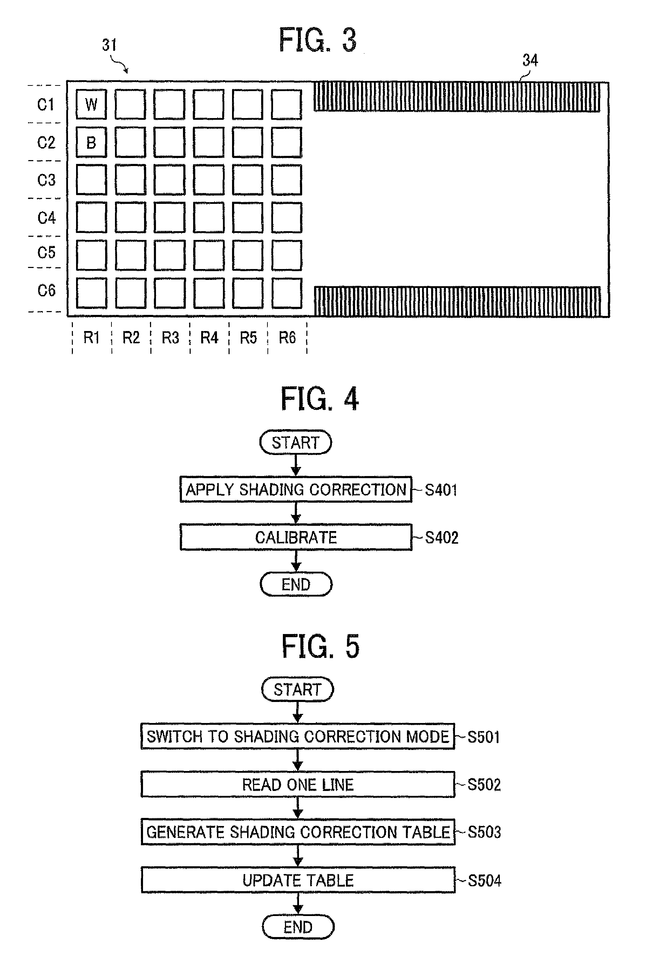

Referring now to FIG. 3, a configuration of the calibration plate 31 is explained according to an example embodiment of the present invention. As illustrated in FIG. 3, the calibration plate 31 has an upper surface formed with the total of 36 color patches, arranged in six rows and six columns. Of the 36 color patches, the patch arranged in the first row R1 and the first column C1 has the white color, as denoted by "W" in FIG. 3. The patch arranged in the first row R1 and the second column C2 has the black color, as denoted by "B" in FIG. 3. The rest of color patches, that is, the other 34 color patches respectively have different colors other than the white and the black.

The white color patch and the black color patch may be used to correct the color tone during the calibration process. The white color patch and the black color patch may also be used to apply shading correction. The color patches are arranged in distance from one another, so that the adjacent color patches are separated by a space. In order to make easier to distinguish between the different patches, the space between the color patches may be colored. For example, the space between the patches may be colored with a background color of the calibration plate 31. Alternatively, the space between the patches may be colored with a specific color that is decided based on the colors of the adjacent patches, such that the boundary defining each color patch will be clear.

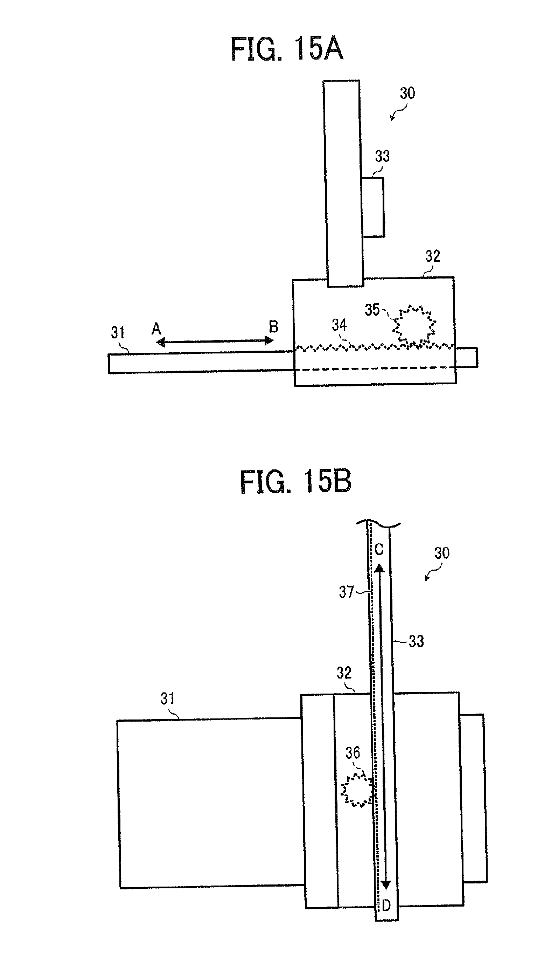

As illustrated in FIG. 15A, the calibration plate 31 has a gear 34, which is provided at a position that can be supported by the calibration plate holder 32. FIG. 15A illustrates an enlarged section of the calibrator 30 of FIG. 1. Referring to FIG. 15A, the calibration plate holder 32 has a gear 35 in its inside, such as in its inner wall. The gear 34 of the calibration plate 31 is engaged with the gear 35 provided at the calibration plate holder 32. As the gear 35 of the calibration plate holder 32 rotates, the calibration plate 31 that is engaged with the gear 35 moves in the sub-scanning direction.

The guide rail 33 is provided with a gear, which is engaged with a gear of the calibration plate holder 32. FIG. 15B illustrates an enlarged section of the calibrator 30 of FIG. 2. Referring to FIG. 15B, the calibration plate holder 32 has a gear 36, which faces the guide rail 33 and is engaged with a gear 37 provided at the guide rail 33. The movement of the calibration plate holder 32 along the guide rail 33, or the movement of the calibration plate 31 by the calibration plate holder 32, may be controlled by the reading controller 14. More specifically, according to the instructions received from the reading controller 14, the drive controller 16 drives the gears 35 and 36 of the calibration plate holder 32, thus causing the calibration plate 31 to move through the calibration plate holder 32 in the main scanning direction and the sub-scanning direction.

The color patches formed on the calibration plate holder 32 of FIG. 3 may be used for the calibration process or shading correction process. More specifically, in this example, the line sensor 13 causes the image capturing elements 13a to read the color patches formed on the calibration plate 31 to generate a reading result, and corrects the output of the line sensor 13 such that the reading result would have a desired value. The reading controller 14 stores a plurality of reference values that respectively correspond to the color patches of the calibration plate 31. The reading controller 14 compares the reading results of the line sensor 13 on the color patches, with the reference values to generate a comparison result. The comparison result is used for the calibration process or the shading correction process.

Referring now to FIG. 4, operation of calibrating the line sensor 13, performed by the image reading device 1 operating in the calibration mode, is explained according to an example embodiment of the present invention. In the calibration mode, the image reading device 1 performs shading correction at S401, and calibration at S402.

Referring now to FIG. 5, operation of applying shading correction is explained according to an example embodiment of the present invention.

At S501, the reading controller 14 switches the output mode of the line sensor 13 to a shading correction mode to start shading correction. Under the shading correction mode, the line sensor 13 outputs 10-bit data for each color of R, G, and B, per one image pixel, as read image data. Further, in the shading correction mode, the reading controller 14 adds "0" data, that is, an empty signal, to the upper 6 bits, respectively, to 10-bit R data, 10-bit G data, and 10-bit B data that are output from the line sensor 13, to process as 16-bit R data, 16-bit G data, and 16-bit G data. With this processing, a format of the read data is made applicable to a data format that can be processed by the general-purpose information processing apparatus, such as the general-purpose computer.

After the shading correction is started, the operation proceeds to S502. At S502, the reading controller 14 controls the calibration plate holder 32 and the line sensor 13 such that the line sensor 13 can read the color patches arranged in the first row R1 of the calibration plate 31.

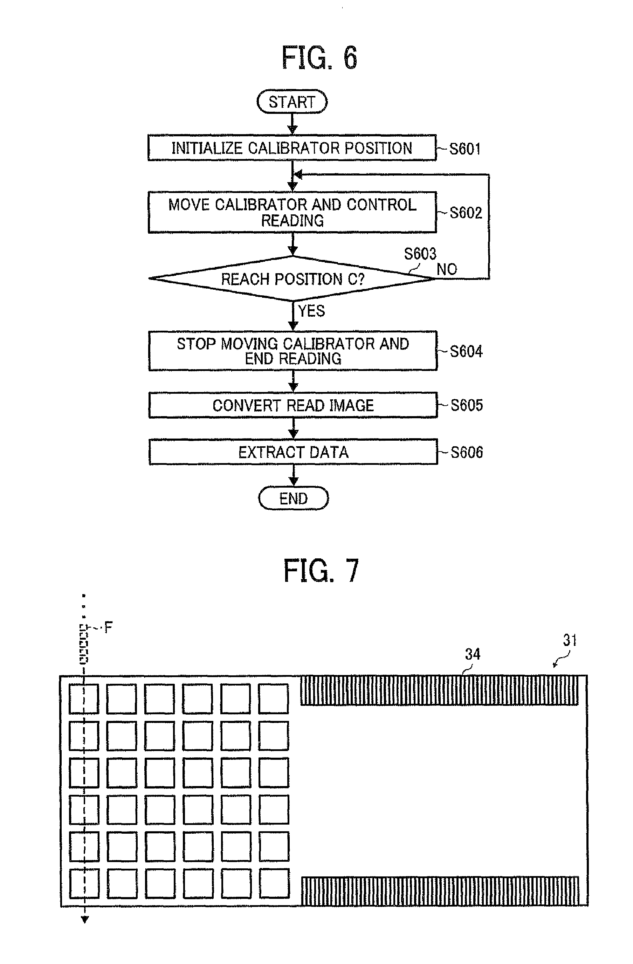

Referring now to FIG. 6, operation of reading one line (one row) of color patches, which is performed at S502, is explained according to an example embodiment of the present invention.

At S601, the reading controller 14 brings the position of the calibration plate 31 to the initial position. More specifically, the reading controller 14 moves the calibration plate 31 to a position along a line extending from the reading position in the sub-scanning direction, such that the first row R1 of the calibration plate 31 can be read by the line sensor 13. Through initializing the position, the positional relationship between the reading position to be read by the line sensor 13 and the color patches formed on the calibration plate 31 can be controlled as illustrated in FIG. 7.

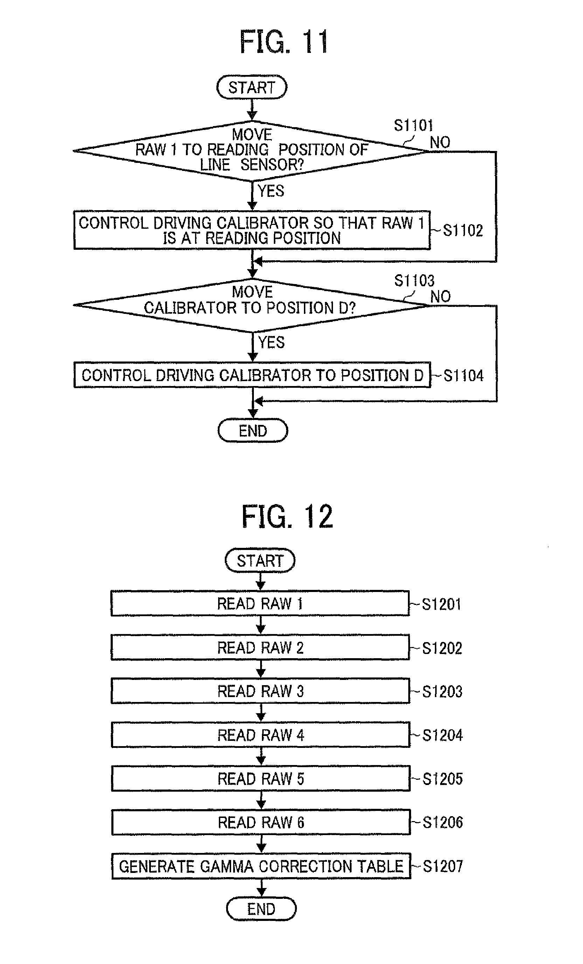

Referring now to FIG. 11, operation of initializing the position of the calibration plate 31, performed at S601 of FIG. 6, is explained according to an example embodiment of the present invention.

At S1101, the reading controller 14 checks whether the first row R1 of the patches formed on the calibration plate 31 is located at the reading position of the line sensor 13 in the sub-scanning direction. When it is determined that the first row R1 of the patches needs to be moved to the reading position of the line sensor 13 in the sub-scanning direction, ("YES" at S1101), the operation proceeds to 1102. When it is determined that the first row R1 of the patches does not need to move to the reading position in the sub-scanning direction ("NO" at S1101), the operation proceeds to S1103.

At S1102, the reading controller 14 controls the gear 35 of the calibration plate holder 32 to move the calibration plate 31 in the sub-scanning direction, so that the first row R1 of the patch formed on the calibration plate 31 is moved to the reading position of the line sensor 13 in the sub-scanning direction.

At S1103, the reading controller 14 checks whether the calibration plate 31 of the calibrator 30 is located at the position D of FIG. 2 in the main scanning direction. When the calibration plate 31 is not at the position D such that the calibration plate 31 of the calibrator 30 needs to be moved to the position D ("YES" at S1103), the operation proceeds to S1104. When the calibration plate 31 is at the position D such that the calibration plate 31 does not need to be moved to the position D ("NO" at S1103), the operation ends.

At S1104, the reading controller 14 controls the gear 36 of the calibration plate holder 32, via the drive controller 16, to move the calibration plate 31 of the calibrator 30 along the guide rail 33 to the position D. Accordingly, the calibration plate 31 is moved to the initial position, that is, at the reading position at which the line sensor 31 can read.

At S602, the reading controller 14 controls to move the calibration plate holder 32 along the guide rail 33, from the position D to the position C as illustrated in FIG. 1. At the same time, the reading controller 14 controls the line sensor 13 to read the color patches formed on the calibration plate 31. More specifically, the reading controller 14 performs reading operation in a substantially similar manner as the reading controller 14 reads image data, such as, from the printed sheet. In the reading process, the reading controller 14 reads image data of one line in the main scanning direction, line by line in the sub-scanning direction, to form image data of one document, i.e., one printed sheet.

At S603, the reading controller 14 determines whether the calibration plate 31 of the calibrator 30 reaches the position C in FIG. 1. When it is determined that the calibration plate 31 of the calibrator 30 does not reach the position C ("NO" at S603), the operation repeats S602. In this manner, image data is read from one row of the calibration plate 31 while the calibration plate 31 of the calibrator 30 is moved to the position C.

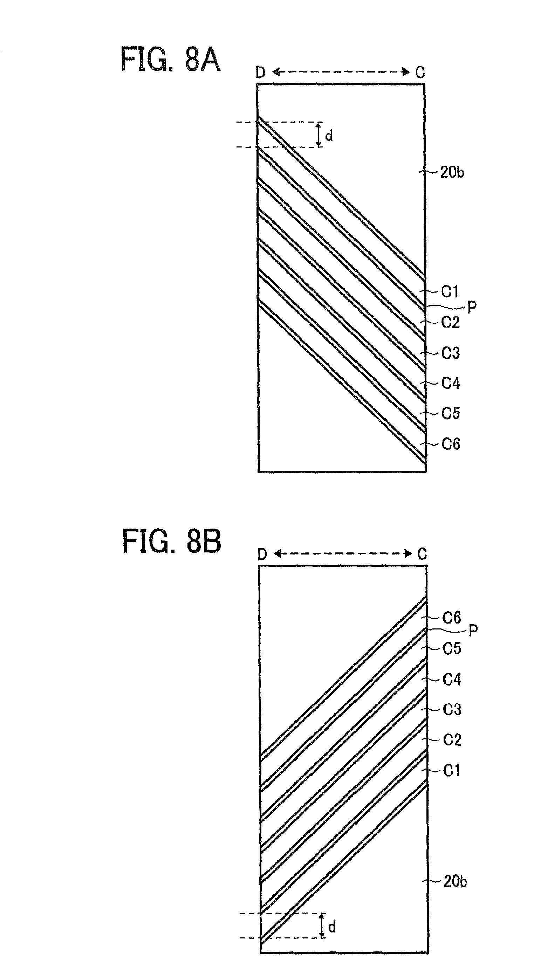

When it is determined that the calibration plate 31 of the calibrator 30 reaches the position C ("YES" at S603), the reading controller 14 ends control of movements of the calibration plate holder 32 as well as ends control of reading using the line sensor 13. At this time, it is assumed that the image data of FIG. 8A is generated, as the line sensor 13 reads one row of the calibration plate 31 while moving the calibration plate 31 from the position D to the position C.

Referring to FIG. 8A, the image data can be expressed as a diagonal pattern including the colors of the patches (C1 to C6), the background color of the calibration plate 31, and the spaces "P" between the patches, which is formed on the read image of the transfer belt 20b of the transfer device 20. Assuming that the moving speed of the calibration plate 31 of the calibrator 30 in the main scanning direction and the moving speed of the transfer belt 20b of the transfer device 20 are equal, the angle of the diagonal pattern is 45 degrees with respect to the main scanning direction and the sub-scanning direction. On the other hand, when the moving speed of the calibration plate 31 of the calibrator 30 in the main scanning direction is greater than the moving speed of the transfer belt 20b, the angle between the diagonal pattern and the main scanning direction becomes larger than 45 degrees. When the moving speed of the calibration plate 31 of the calibrator 30 in the main scanning direction is less than the moving speed of the transfer belt 20b, the angle between the diagonal pattern and the main scanning direction becomes less than 45 degrees. In the following examples, the main scanning direction is referred to as the X direction, and the sub-scanning direction is referred to as the Y direction.

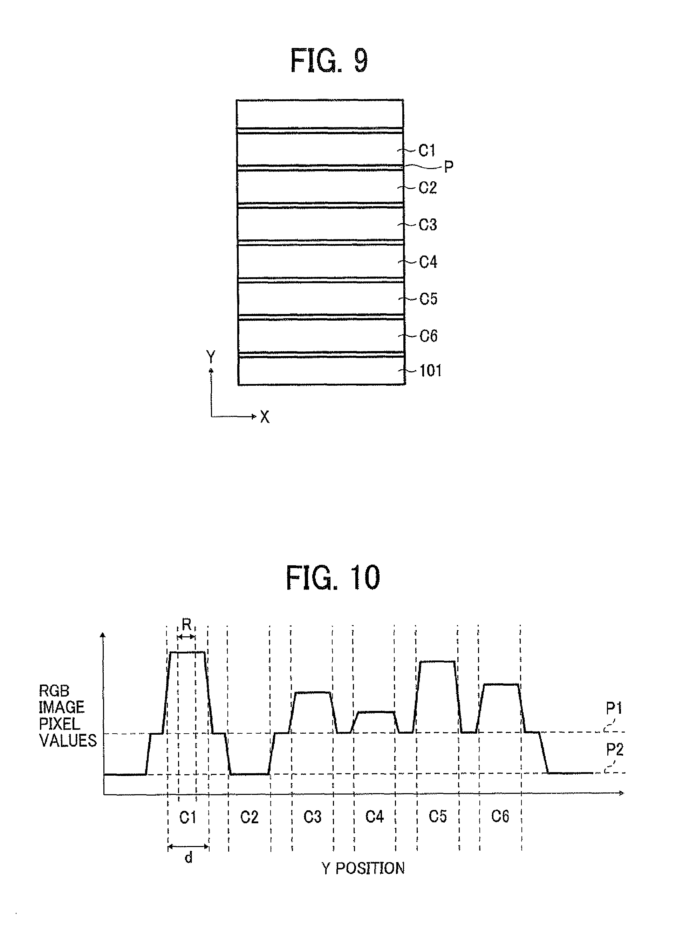

As the read image data of FIG. 8A is obtained, at S605, the reading controller 14 converts the read image data to converted image data of FIG. 9. Through conversion, any portion corresponding to the transfer belt 20b that is not used for image processing is deleted. Further, the angle of the diagonal pattern is corrected such that the pattern is made orthogonal with the Y direction. In the image data of FIG. 9, the pixels in the X direction correspond to the read results of the imaging elements 13a of the line sensor 13, and the pixels in the Y direction correspond to the temporal change of the read results of the imaging elements 13a of the line sensor 13.

Referring back to FIG. 6, at S606, the reading controller 14 extracts data from the converted image data of FIG. 9, for shading correction. As described above, the pixels in the Y direction, which correspond to the temporal change of the read results of the imaging elements 13a of the line sensor 13, reflect the pixels arranged in the sub-scanning direction. FIG. 10 illustrates the change in read pixel values for one line in the Y direction.

As illustrated in FIG. 10, the read results of the imaging elements 13a of the line sensor 13 correspond to the pixel values of the patch colors respectively obtained from the columns C1 to C6 in the first row R1, in the Y direction, that is, the sub-scanning direction. Since the white color and the black color are used for shading correction, at S806, the image reading controller 14 extracts the pixel value of the white color patch positioned at R1 and C1, and the pixel value of the black color patch position at R1 and C2.

For simplicity, the graph of FIG. 10 shows the change in pixel values of the patches in the first row R1. In this example, the reading controller 14 extracts the pixel values of the patches for the first and second columns C1 and C2, throughout all rows R1 to R6 in the sub-scanning direction, from the image data of FIG. 9. As described above, the image data of FIG. 9 includes the pixel values obtained by the imaging elements 13a of the line sensor 13.

Referring to FIG. 10, in order to obtain the pixel value of the patch color, the reading controller 14 detects a range "d" to be extracted for each patch of FIG. 10, using the pixel value "P1" corresponding to the space "P" (FIG. 9) that defines the patch. The reading controller 14 extracts a center section "R" of the range "d", and calculates the average value of the pixel values extracted from the center section "R" as the pixel value of the patch color.

As described above, the pixel value "P1" may be the background color of the calibration plate 31. For example, the pixel value "P1" corresponding to the space "P" between the patches may be previously registered in the reading controller 14. The reading controller 14 compares the registered pixel value "P1" with the read pixel value to detect the space "P" between the patches, and determines that the portion other than the detected space "P" indicates the pixel values of the patch colors to extract that portion as the range "d" to be read.

Alternatively, each space "P" between the patches is assigned with a color that makes the boundary between the patches clear. Accordingly, the reading controller 14 may detect the space "P" between the patches, by determining whether there is any sudden change in pixel values. The center section "R" of the range "d" to be extracted may be set so as to have the range that is 50 percent of the range "d" in the Y direction.

In FIG. 10, the pixel value "P2" corresponds to the black pixel value, or the color of the transfer belt 20b. For example, the reading controller 14 may previously register the pixel value "P2", and uses the pixel value "P2" to detect the black color patch at C2 or to remove the portion corresponding to the transfer belt 20b from the image data of FIG. 9A.

As described above, in this example, the calibration plate 31 has the color patches formed on the surface as illustrated in FIG. 3. The reading controller 14 controls reading the patch colors in a substantially similar manner as the case of reading an image on the printed sheet, to obtain the pixel values of the patch colors. More specifically, in order to read the pixel values of the color patches formed on the calibration plate 31, the positional relationship between the imaging elements 13a of the line sensor 13 and the calibration plate 31, on a two-dimensional plane, is controlled. In one example, the imaging elements 13a of the line sensor 13 is moved with respect to the calibration plate 31. In another example, the calibration plate 31 is moved with respect to the line sensor 13. Controlling the position of the line sensor 13 or the calibration plate 31 can be easily controlled, when compared with the conventional case in which the calibration plate is stopped for each imaging element, or the calibration plate is rotated.

After completing S502 of reading one line of image data, the operation proceeds to S503 of FIG. 5. The reading controller 14 generates a shading correction table for all of the imaging elements 13a of the line sensor 13, based on the data extracted through the reading process at S502, that is, the reading results of the "white" and "black" color patches of the calibration plate 31. More specifically, at S503, the reading controller 14 generates the shading correction table using any desired shading correction technique, which can convert the pixel values of the reading result to the white or black pixel values.

At S504, the reading controller 14 updates a shading correction table that is previously registered using the shading correction table generated at S503, and the operation of S401 of FIG. 4 ends. The operation further proceeds to S402 to perform calibration of the line sensor 13, which is described below referring to FIG. 12.

At S1201 to S1206, the reading controller 14 controls so that the colors of the patches formed on the calibration plate 31 are read sequentially, from the first row R1 to the sixth row R6, to extract the pixel values of the patch colors. S1201 to S1206 are processed in a substantially similar manner as described above referring to FIG. 6, except for some differences. The differences include that data to be output by the line sensor 13 is 24-bit RGB image data including 8-bit R image data, 8-bit G image data, and 8-bit B image data, and that data extracted at S606 not only includes the pixel values of the first and second columns but also the third to sixth columns.

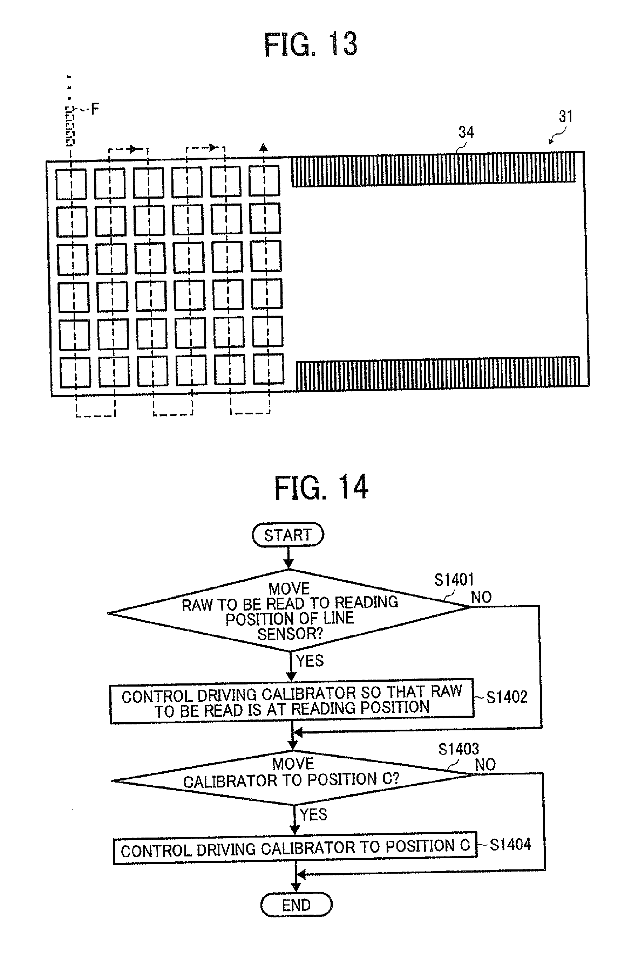

Further, when reading the pixel values for the odd rows R1, R3, and R5, respectively, at S1201, S1203, and S1205, the reading controller 14 controls such that the calibration plate 31 of the calibrator 30 is moved from the position D to the position C of FIG. 2. When reading the pixel values for the even rows R2, R4, and R6, respectively, at S1202, S1204, and S1206, the reading controller 14 controls such that the calibration plate 31 of the calibrator 30 is moved from the position C to the position D of FIG. 2. Since the reading controller 14 switches the direction of moving the calibrator 30 for the odd row and even row, the patches formed on the calibration plate 31 are read with improved efficiency as indicated by the path shown in FIG. 13.

Referring to FIG. 13, in the calibration process, the reading controller 14 moves the calibration plate holder 32 together with the calibration plate 31, such that the reading position of the calibration plate 31 to be read by line sensor 13 moves in the path indicated by the doted arrow. While the calibration plate holder 32 and the calibration plate 31 are being moved, the line sensor 13 reads the colors of the patches formed on the calibration plate 31 at the reading position. As indicated by the doted arrow, the odd rows R1, R3, and R5 of the patches are read in the order from C1 to C6, and the even rows R2, R4, and R6 of the patches are read in the order from C6 to C1.

Referring now to FIG. 14, operation of reading the patch colors for the even rows R2, R4, and R6 is explained while focusing on the differences with respect to operation of reading the patch colors for the odd rows R1, R3, and R5. More specifically, the operation of FIG. 14 corresponds to S601 of initializing the position of the calibration plate 31.

The operation of FIG. 14 is performed in a substantially similar manner as described above referring to FIG. 11, except that the row to be read at S1401 is the even row R2, R4, or R6, and that the calibration plate 31 of the calibrator 30 is moved from the position C to the position D.

Referring back to FIG. 12, through performing S1201 to S1206, the pixel values are extracted from the read image data, which is the read results of all patches formed on the calibration plate 31, which are respectively obtained by the imaging elements 13a of the line sensor 13. In this example, FIG. 8A illustrates the read image data for the odd rows R1, R3, and R5, and FIG. 8B illustrates the read image data for the even rows R2, R4, and R6. The reading controller 14 applies processing to the read image data of FIG. 8A and the read image data of FIG. 8B, in a substantially similar manner as described above referring to S605 and S606 of FIG. 6.

In the above-described case of S606 of FIG. 6, in the shading correction process at S401, the reading controller 14 extracts the pixel values of only the white and black color patches. In the calibration process at S402, the reading controller 14 extracts the pixel values of the colors of all patches. At S1207, the reading controller 14 compares the pixel values of the patches that are extracted, with the reference values that are generated at S401, to generate a gamma correction table to be used for correcting the pixel values of the read image data, thus correcting color tones of the read image data.

The reference values may be stored, for example, in a memory such as a recording medium, in an order defined by the arrangement of the color patches. At S1208, the reading controller 14 compares the pixel values obtained by reading the color patches, with the reference values generated and stored for the respective color patches, to generate a gamma correction table that can correct the difference between the read pixel values and the reference values.

In the above-described example of the image reading device 1, through moving the calibration plate 31 of the calibrator 30 along the guide rail 33 in the sub-scanning direction, calibration may be applied to all imaging elements 13a of the line sensor 13. Further, through moving the calibration plate 31 of the calibrator 30, the imaging elements 13a of the line sensor 13 respectively read the color patches formed on the calibration plate 31. Accordingly, it is not necessary to provide a calibration plate having a surface area that corresponds to the image reading area of the imaging elements 13a included in the line sensor 13.

In other words, there is no need to provide the calibration plate having the uniform color tones over the large surface area, thus the structure of the calibrator 30 may be simplified. Further, there is no need to maintain the cleanness of the calibration plate having the large surface area such that the operation cost can be greatly reduced. Further, the size of the calibration plate 31 can be greatly reduced. Accordingly, with the above-described structure and control operation of the image reading device 1, calibration of the optical sensor is made easier.

The reading controller 14 may be implemented by a combination of hardware and software. For example, the reading controller 14 may be implemented by a hardware structure including a computing device such as a central processing unit (CPU), a volatile memory such as a random access memory (RAM), and a nonvolatile memory such as a read only memory (ROM) and a hard disk drive (HDD). The nonvolatile memory may store various control programs such as the operating system (OS) and application programs. When the program is loaded from the nonvolatile memory onto the RAM, the CPU performs according to the loaded program to function as the reading controller 14.

More specifically, in this example, the memory may be provided with an image reading control program, which causes a processor to perform various image reading control operations as described above including controlling the relative position between the calibration plate 31 and the line sensor 13.

In one example, the image reading device 1 as described above may be incorporated in an image inspection apparatus, which reads a printed image formed on the recording sheet that is output from an image forming apparatus to output an inspection result. The inspection result indicates whether the printed image is in good quality. Referring now to FIG. 16, a structure of an image inspection system having the image reading device 1 is explained according to an example embodiment of the present invention.

The image inspection system of FIG. 16 may be implemented by a system including a print engine 201, an inspection apparatus 202, and a stacker 203. The print engine 201 is implemented as the tandem-type image forming device. More specifically, the print engine 201 includes a plurality of photoconductive drums 102Y, 102M, 102C, and 102K (collectively referred to as the photoconductive drum 102), which are disposed side by side along a transfer belt 101 in the direction from the upstream of the sheet transfer direction. The transfer belt 101, which is an endless belt, is an intermediate transfer belt, which is formed with an intermediate transfer image to be transferred onto the recording sheet fed by a sheet feeding tray 103. In operation, the toner images of the respective colors, which are formed on the surfaces of the photoconductive drums 102, are transferred to the transfer belt 101 one above the other to form the full-color toner image. The full-color toner image formed on the transfer belt 101 is conveyed to a transfer position between a transfer roller 104 and a sheet transfer path (indicated by the doted line). At the transfer portion, the full-color toner image is transferred from the transfer belt 101 to the recording sheet, which is transferred through the sheet transfer path by a plurality of transferring rollers.

The recording sheet having the full-color toner image formed thereon is further conveyed to a fixing roller 105. The fixing roller 105, together with a pressure roller, fixes the toner image onto the recording sheet by heat and pressure.

In case of single-sided printing, the recording sheet is further conveyed to the inspection apparatus 202.

In case of double-sided printing, the recording sheet having one side with the fixed toner image is conveyed to a switchback path 106, and transferred back to the transfer roller 104 to receive another image on the other side of the recording sheet. The recording sheet, after being fixed at the fixing roller 105, may be then conveyed to the inspection apparatus 202. To make inspection easier, it is assumed that the single-sided printed image is conveyed to the inspection apparatus 202.

The inspection apparatus 202 reads out the surface of the recording sheet having the printed image, which is conveyed from the print engine 201 through the sheet transfer path, to generate a read image, using the image reading device 1 of FIG. 1. The inspection apparatus 202 obtains image data, which is used by the print engine 201 to form the toner image that is subjected for reading, to generate a master image. The inspection apparatus 202 compares between the read image and the master image to output an inspection result.

The recording sheet, read by the image reading device 1, is further conveyed to the stacker 203. The stacker 203 stacks the recording sheet conveyed from the inspection apparatus 202 onto a tray 204.

By incorporating the image reading device 1 into the inspection apparatus 202, the printed image may be read with improved accuracy, while simplifying the calibration process of the optical sensor.

Further, in the above-described example of FIG. 16, the inspection apparatus 202 includes one image reading device 1. The inspection apparatus 202 may be provided with two image reading devices 1, for example, to inspect both sides of the recording sheet.

Numerous additional modifications and variations are possible in light of the above teachings. It is therefore to be understood that within the scope of the appended claims, the disclosure of the present invention may be practiced otherwise than as specifically described herein.

For example, elements and/or features of different illustrative embodiments may be combined with each other and/or substituted for each other within the scope of this disclosure and appended claims.

Further, any of the above-described devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cashe memory of the CPU, and the RAM may function as a physical memory or a primary memory of the apparatus, while the HDD may function as a secondary memory of the apparatus.

In one example, the present invention may reside in an image reading device capable of calibrating a correction value to be used for correcting a reading result of an imaging element. The image reading device includes an imaging device including a plurality of imaging elements, a calibration plate having a surface on which a plurality of color patches is formed and configured to move along the arrangement of the imaging elements of the imaging device, the plurality of color patches being read in the process of calibrating the imaging device; and a controller that controls the calibration process using the calibration plate. In the calibration process, the controller, such as a processor, controls the relative position of the imaging device and the calibration plate such that the plurality of color patches are read by the imaging device. The controller compares the reading results of the plurality of colors patches, with reference values that are previously stored for the plurality of color patches, to generate correction values to be used for correcting the reading results of the plurality of color patches.

In the above-described example, in the calibration process, the controller obtains reading results of the plurality of imaging elements in a time series as the calibrator moves. The controller further extracts the reading results of the plurality of color patches from the reading results of the plurality of imaging elements.

In the above-described example, the controller generate read image data by connecting the reading results of the plurality of imaging elements that are respectively obtained over time in the sub-scanning direction, and extracts a plurality of image pixels from the read image data line by line in the sub-scanning direction, to obtain the reading results of the plurality of imaging elements over time.

In one example, the plurality of color patches is formed in distance from one another to form a predetermined space therebetween. The controller distinguishes a color of the color patch from a color of the space to extract the reading results of the plurality of color patches.

In one example, the plurality of color patches includes a white color patch and a black color patch. The controller applies shading correction based on the comparison result between the reading results of the white and black color patches and reference values that are previously stored. After the shading correction, the controller moves the calibration plate such that the plurality of color patches are read by the imaging device, and generate the correction values.

In the shading correction process, the controller causes the imaging device to output a reading signal having resolution capability that is higher than resolution capability of a reading signal output by the imaging device in a normal operation mode.

The controller adds a blank signal to the reading signal of the white color patch or the black color patch that is output by the imaging device during the shading correction process, based on a process unit.

In one example, the present invention may reside in a method of controlling an image reading device capable of calibrating a correction value to be used for correcting a reading result of an imaging element. The image reading device includes an imaging device including a plurality of imaging elements, a calibration plate having a surface on which a plurality of color patches is formed and configured to move along the arrangement of the imaging elements of the imaging device, the plurality of color patches being read in the process of calibrating the imaging device; and a controller that controls the calibration process using the calibration plate. The method includes: controlling the relative position of the imaging device and the calibration plate such that the plurality of color patches are read by the imaging device; and comparing the reading results of the plurality of colors patches, with reference values that are previously stored for the plurality of color patches, to generate correction values to be used for correcting the reading results of the plurality of color patches.

In one example, the present invention may reside in: a method of controlling an image reading device, the image reading device provided with an imaging device including a plurality of imaging elements, and a calibration plate having a surface on which a plurality of color patches is formed, the method including: instructing the imaging device to read the plurality of color patches while changing a relative position between the plurality of color patches and the plurality of imaging elements, to output reading results of the plurality of color patches; comparing the reading results of the plurality of color patches, with a set of reference values that is previously stored respectively for the plurality of color patches, to generate a comparison result; and generating a set of correction values based on the comparison result, the set of correction values being used for correcting the reading results of the plurality of color patches.

In the above-described example, the inspection method may further includes adding an empty signal to the reading signal of the predetermined color patch that is output by the imaging device.

In the above-described example, the inspection method may further include: switching an operation mode of the imaging device from a normal operation mode to a calibration mode before instructing the imaging device to read the plurality of color patches; and causing the imaging device to output, in the calibration mode, a reading signal having resolution capability that is higher than resolution capability of a reading signal being output by the imaging device in the normal operation mode.

## Claims

1. An image reading device (1), comprising:
an imaging device (13) including a plurality of imaging elements (13a);
a calibration plate (31) having a surface on which a plurality of color patches is formed; and
a processor (14) configured to:
instruct the imaging device (13) to read the plurality of color patches while changing a relative position between the plurality of color patches and the plurality of imaging elements (13a), to output reading results of the plurality of color patches;
compare the reading results of the plurality of color patches, with a set of reference values that is previously stored respectively for the plurality of color patches, to generate a comparison result; and
generate a set of correction values based on the comparison result, the set of correction values being used for correcting the reading results of the plurality of color patches.

2. The image reading device (1) of claim 1, wherein the processor (14) is configured to,
obtain reading results of the plurality of imaging elements (13a) in time series while changing the relative position between the plurality of color patches and the plurality of imaging elements (13a) over time, and
extract the reading results of the plurality of color patches from the reading results of the plurality of imaging elements (13a).

3. The image reading device (1) of claim 2, wherein the processor (14) is configured to,
combine the reading results of the plurality of imaging elements (13a) that is obtained in time series, in a sub-scanning direction (Y) of the image reading device (1), to generate read image data; and
extract a plurality of image pixels from the read image data, line by line, in the sub-scanning direction (Y) to obtain the reading results of the plurality of imaging elements (13a).

4. The image reading device (1) of any one of claims 1 to 3, wherein the plurality of color patches is formed in distance from one another to create a space therebetween, the space having a color different from a color of each one of the plurality of color patches, and
the processor (14) extracts the plurality of image pixels from the read image data, based on difference between the color of the space and the color of the color patch.

5. The image reading device (1) of any one of claims 1 to 4, wherein the plurality of color patches includes a predetermined color patch (B, W) having a predetermined color, the predetermined color being one of black or white, and the processor (14) is configured to:
obtain a reading result of the predetermined color patch (B, W);
compare the reading result of the predetermined color patch (B, W) with a reference value previously stored for the predetermined color patch (B, W) to generate a comparison result; and
perform shading correction based on the comparison result, before instructing the imaging device (13) to read the plurality of color patches.

6. The image reading device of claim 5, wherein the processor (14) is configured to add an empty signal to the reading signal of the predetermined color patch (B, W) that is output by the imaging device (13).

7. The image reading device of any one of claims 1 to 6, wherein the processor (14) is configured to switch an operation mode of the imaging device (13) from a normal operation mode to a calibration mode before instructing the imaging device (13) to read the plurality of color patches, and cause the imaging device (13) to output, in the calibration mode, a reading signal having resolution capability that is higher than resolution capability of a reading signal being output by the imaging device (13) in the normal operation mode.

8. The image reading device of any one of claims 1 to 7, wherein the surface of the calibration plate (31) has a length in a main scanning direction that is shorter than a length of the imaging device in the main scanning direction.

9. An inspection apparatus (202), comprising at least one image reading device (1) of any one of claims 1 to 8.

10. A method of controlling an image reading device (1), the image reading device (1) provided with an imaging device (13) including a plurality of imaging elements (13a), and a calibration plate (31) having a surface on which a plurality of color patches is formed, the method comprising:
instructing the imaging device (13) to read the plurality of color patches while changing a relative position between the plurality of color patches and the plurality of imaging elements (13a), to output reading results of the plurality of color patches;
comparing the reading results of the plurality of color patches, with a set of reference values that is previously stored respectively for the plurality of color patches, to generate a comparison result; and
generating a set of correction values based on the comparison result, the set of correction values being used for correcting the reading results of the plurality of color patches.

11. The method of claim 10, further comprising:
obtaining reading results of the plurality of imaging elements (13a) in time series while changing the relative position between the plurality of color patches and the plurality of imaging elements (13a) over time; and
extracting the reading results of the plurality of color patches from the reading results of the plurality of imaging elements (13a).

12. The method of claim 11, further comprising:
combining the reading results of the plurality of imaging elements (13a) that is obtained in time series, in a sub-scanning direction (Y) of the image reading device (1), to generate read image data; and
extracting a plurality of image pixels from the read image data, line by line, in the sub-scanning direction (Y) to obtain the reading results of the plurality of imaging elements (13a).

13. The method of any one of claims 10 to 12, wherein the plurality of color patches is formed in distance from one another to create a space therebetween, the space having a color different from a color of each one of the plurality of color patches, the method further comprising:
extracting the plurality of image pixels from the read image data, based on difference between the color of the space and the color of the color patch.

14. The method of any one of claims 10 to 13, wherein the plurality of color patches includes a predetermined color patch (B, W) having a predetermined color, the predetermined color being one of black or white, the method further comprising:
obtaining a reading result of the predetermined color patch (B, W);
comparing the reading result of the predetermined color patch (B, W) with a reference value previously stored for the predetermined color patch (B, W) to generate a comparison result; and
performing shading correction based on the comparison result, before instructing the imaging device (13) to read the plurality of color patches.

15. A carrier medium carrying computer readable code for controlling a computer to carryout the display control method of any one of claims 10 to 14.
